# EUROPÄISCHE PATENTSCHRIFT

(11) **EP 0 433 440 B1**
(45) Veröffentlichungstag und Bekanntmachung des Hinweises auf die Patenterteilung: **09.03.1994**
(21) Anmeldenummer: 90911736.8
(22) Anmeldetag: 10.07.1990
(51) Int. Cl.: F16L 9/14, E21D 9/00

(54) **ROHRVERBINDUNG FÜR VORTRIEBSROHRE, DIE IN VORTRIEBSTECHNIK UNTERIRDISCH VERLEGT WERDEN**
PIPE CONNECTION FOR ADVANCE WORKING PIPES LAID UNDERGROUND BY AN ADVANCE WORKING TECHNIQUE
JONCTION DE TUYAUX PROPULSES POSES SOUS TERRE PAR UNE TECHNIQUE DE PROPULSION

(30) Priorität: 12.07.1989 DE 3922985
(43) Veröffentlichungstag der Anmeldung: 26.06.1991
(73) Patentinhaber: PONT-A-MOUSSON S.A., 54017 Nancy (FR)
(72) Erfinder: HEIN, Hans-Georg, Dr.-Ing., D-6604 Brebach-Fichingen (DE)
(74) Vertreter: Kirschner, Klaus Dieter, Dipl.-Phys.
(86) Internationale Anmeldenummer: EP9001124
(87) Internationale Veröffentlichungsnummer: WO9100974

(56) Entgegenhaltungen:
- BE-A- 806 494
- DE-A- 3 703 580
- DE-A- 3 841 064
- DE-C- 3 618 334

## Beschreibung

Die Erfindung betrifft eine Rohrverbindung gemäß dem Oberbegriff des Patentanspruchs 1.

In jüngster Zeit geht man immer häufiger dazu über, Abwasserrohre u. dgl. mit Hilfe der sogenannten Vortriebstechnik unter Flur zu verlegen. Bei der Vortriebstechnik werden die Rohre von einem zentralen Schacht bzw. einer Grube aus in die gewünschten Richtungen bis zu einem anderen Schacht vorgetrieben, wobei die derzeitige Verlegeweite der Rohre etwa 75 - 100 m beträgt, sich jedoch noch steigern wird. Mit dieser Vortriebstechnik können insbesondere zweckmäßig Rohre mit Nennweiten von 250 bis 1000 mm verlegt werden. Der Vorteil dieser Vortriebstechnik besteht darin, daß zum unterirdischen Verlegen von Abwasserrohren nicht mehr Schächte über die gesamte Verlegelänge gegraben werden müssen. Dadurch entfallen nicht nur aufwendige Grabungsarbeiten, sondern können auch damit verbundene Sperrungen von Straßenzügen auf einem Minimum gehalten werden.

Für die Längen der im Wege der Vortriebstechnik unterirdisch verlegten Rohre ergibt sich jedoch eine Begrenzung durch den Durchmesser des zentralen Schachts. Bei einem Schachtdurchmesser von 2 m können Rohre aus dem Schacht vorgetrieben werden, die eine Länge von etwa 1 m aufweisen. Bei einem Schachtdurchmesser von 3 m ist es möglich, Rohre mit einer Länge von 2 m vorzutreiben. D.h., bei der Vortriebstechnik ist die Länge der zu verlegenden Rohre begrenzt, so daß es einer Vielzahl von Rohrverbindungen zum Zusammenschließen der Rohre zu einer Leitung bedarf.

Beim Verlegen von Rohren unter Flur im Wege der Vortriebstechnik kommt aber den Rohrverbindungen besondere Bedeutung zu, da die Rohrverbindungen weder nach außen noch nach innen über das Rohr vorstehen sollen. Nach innen sollen sie deswegen nicht vorstehen, weil Abwasserrohre regelmäßig mit einem geringen Gefälle verlegt werden und die im Rohr befindlichen Vorsprünge dann Sperren für die Abwasserführung darstellen würden. Vorsprünge der Rohrverbindung nach außen stören jedoch beim Vorpressen der Rohre, da erhebliche Reibungskräfte übernommen werden müssen. Die Kräfte, die bei Außenvorsprüngen durch Rohrverbindungen aufgebaut werden, würden entsprechend groß werden, so daß die Gefahr eines Abscherens der nach außen vorstehenden Vorsprünge besteht. Abgesehen davon wird durch nach außen vorspringende Rippen beim Vortreiben der Rohre Erdmaterial mitgenommen, so daß es zu Einstürzungen von Erdmassen beim unterirdischen Verlegen der Rohre kommen kann. Zwar kann durch Anwendung von Schmiermitteln eine Kraftreduzierung bewirkt werden, jedoch bedingt dies zum einen einen Mehraufwand und ist die damit erreichbare Kraftreduzierung insbesondere in Anbetracht der langen Verlegeweiten von 100 m und mehr nicht ausreichend.

Für die Vortriebstechnik werden sehr häufig Betonrohre mit einer Länge von 1 m verwendet, wobei insbesondere Asbestzementrohre Einsatz finden. Gegenüber Gußrohren besitzen diese Betonrohre eine zehnmal so große Dicke, so daß sich Rohrverbindungen bei derart dicken Betonrohren unter Vermeidung von Überständen außen oder innen ohne weiteres unterbringen lassen. Zwar ergibt sich bei derart dicken Betonrohren eine gute Längskraftübertragung, jedoch muß bei derart großen Außendurchmessern der Rohre sehr viel Material beim Vortreiben der Rohre beseitegeschafft werden. Auch bauen sich bei großen Verlegeweiten infolge der Dicke der Rohre sehr hohe Kräfte auf.

Aus diesem Grund ist man dazu übergegangen , Gußeisenrohre zu verwenden, die mit Betonrohren ummantelt werden (DE-PS 36 18 334). Die Gußeisenrohre dienen hierbei zur Übertragung der Preßkräfte. Zur Verbindung der Gußeisenrohre werden herkömmliche Muffenverbindungen verwendet, wobei die Gußeisenrohre an einem Ende mit einer Aufweitung zur Erzeugung einer Muffe und am anderen Ende als Einsteckende für die Muffe ausgebildet sind. Die Ummantelung der Gußeisenrohre ist jedoch von der Herstellung her aufwendig, weil um das Gußeisenrohr eine Stahlmatte verlegt und darüber Beton gegossen wird, der dann noch aufgerüttelt wird. Es handelt sich mithin um ein teures und aufwendiges Verfahren, um die Vorsprünge der Rohrverbindung nach außen hin zu verstecken. Ein weiterer Nachteil ist darin zu sehen, daß Gußeisenrohre mit einer geringen Länge von 1 m mit unterschiedlichen Endausbildungen, nämlich einerseits Muffe und andererseits Einsteckende, hergestellt werden müssen. Tatsächlich versucht man aber in der Praxis aus herstellungstechnischen Gründen Gußeisenrohre mit großen Länge von 6 bis 7 m herzustellen. Kostengünstiger wäre es hierbei, diese Rohre auf Längen von 1 m zu schneiden und derartig gekürzte Rohre dann für das Verlegen im Rahmen der Vortriebstechnik zu verwenden. Solche Rohre sind dann aber ohne Muffe und entsprechendes Einsteckende ausgebildet.

Aufgabe der Erfindung ist es, eine Rohrverbindung zu schaffen, die weder nach außen noch nach innen aufbaut und sich gleichwohl bei minimaler Dicke der Vortriebsrohre unterbringen läßt, wobei spezielle Endausbildungen der Gußeisenrohre möglichst vermieden werden sollen.

Diese Aufgabe wird erfindungsgemäß durch die im kennzeichnenden Teil des Patentanspruches 1 enthaltenen Merkmale gelöst, wobei zweckmäßige Weiterbildungen der Erfindung durch die in den Unteransprüchen enthaltenen Merkmale gekennzeichnet sind.

Nach Maßgabe der Erfindung werden für die Preßkraft innere Gußeisenrohre, vorzugsweise aus duktilem Gußeisen, verwendet, die sämtlich muffenfrei sind, also beidendig gleich ausgebildet sind. Dadurch ist es möglich, Rohrstücke zu verwenden, die von langen Rohren abgeschnitten werden. Durch entsprechende Gestaltung der Vortriebsrohre mit einer Zwischenschicht und einem äußeren, als verlorene Schalung für die Zwischenschicht dienenden Mantelrohr wird zwischen den aneinander anstoßenden Enden der zu verbindenden Vortriebsrohre Raum zum Unterbringen geeigneter Kupplungselemente geschaffen. Im einzelnen wird mindestens ein Dichtring verwendet, der auf einem gegenüber der Zwischenschicht vorstehenden Endabschnitt des bzw. der Gußeisenrohre der beiden Vortriebsrohre angeordnet bzw.gelagert ist. Als Dichtringe können hierbei herkömmliche Dichtringe für Rohrmuffenverbindungen verwendet werden, so daß die Dicke der auftragenden Zementzwischenschicht praktisch durch die Höhe dieser Dichtringe begrenzt ist. Das äußere Mantelrohr dient als verlorene Schalung für die Mörtelschicht und trägt dazu bei, eine möglichst glatte Außenoberfläche zu erzielen. Dadurch werden die beim Vortreiben der Rohre auftretenden Reibungskräfte erheblich reduziert.

Für das äußere Mantelrohr können Kunststoff oder auch Asbestzement verwendet werden, bevorzugt ist jedoch ein sogenanntes Wickelfalzrohr, also ein aus einem Blechstreifen gewickeltes Rohr, wobei allerdings die Überlappungsfalze nach innen weisen. Das Wickelfalzrohr zeichnet sich durch seine einfache Herstellbarkeit und seinen günstigen Preis aus. Die Außenseite ist vergleichsweise glatt, so daß Reibungskräfte reduziert werden. Die innen vorstehenden Überlappungsfalze dienen zur Verankerung der Zwischenschicht und zugleich als Armierung der Zwischenschicht aus Mörtel. Für die Zwischenschicht eignet sich zementmörtelartiges Material, d.h. Zementmörtel oder ähnliches Material, welches als Mörtel in den Raum zwischen Mantelrohr und Gußeisenrohr einbringbar ist. So kann anstelle von Zementmörtel auch Blähbeton u. dgl. verwendet werden. Mörtel eignet sich jedoch insbesondere wegen seiner geringen Kosten. Wesentlich ist, daß das Material möglichst schwindungsarm ist.

In einer weiteren Ausgestaltung der Erfindung ist ein Distanzring vorgesehen, der dem Innendruck standhalten muß. Dieser Distanzring stellt einen Teil der Rohrverbindung dar und kann aus Stahl, Guß, Kunststoff, Asbestzement oder einem anderen geeigneten Material hergestellt sein. Besonders geeignet sind jedoch Stahl oder Stahlblech.

In einer besonders zweckmäßigen Weiterbildung der Erfindung ist im Bereich der Stoßfuge der beiden inneren Gußeisenrohre ein Ring schwimmend gelagert, der eine nach innen radial vorstehende Zunge aufweist, die in die Fuge zwischen die Stirnseiten der aufeinanderstoßenden Gußeisenrohre greift. Bevorzugt eignet sich ein Ring mit T-förmigem Querschnitt, wobei das Material des Rings weicher als das Material des Gußeisens sein sollte. Als Material eignet sich insbesondere Weicheisen, aber auch Aluminium oder Kupfer. Dieser schwimmend gelagerte Ring ist sehr wesentlich für eine einwandfreie Kraftübertragung, da beim Vortrieb über lange Strecken Abwinklungen möglich sind, die aber durch Stauchen des T-Rings aufgenommen werden können. Notfalls nimmt das duktile Gußeisen durch Stauchung oder Verformung die Abwinklungen auf, wenn die Abwinklungen nicht mehr durch den T-Ring kompensiert werden können.

Besonders zweckmäßig werden zwei Dichtringe verwendet, wobei je ein Dichtring einem der Vortriebsrohre zugeordnet ist,und auf dem axial vorspringenden Endabschnitt des inneren Gußeisenrohres sitzt. Durch die Verwendung der Gußreisenohre und zweier Dichtringe je Rohrverbindung wird eine einwandfrei abgedichtete Verbindung gewährleistet.

In vorteilhafter Weise sind die Vortriebsrohre verlegefertig ausgebildet, umfassend das innere Gußeisenrohr, das äußere Mantelrohr und die Zwischenschicht zwischen Mantelrohr und Gußeisenrohr. In einer vorteilhaften Weiterbildung der Erfindung sind der Distanzring und ggf. einer der Dichtringe in der verlegefertigen Einheit des Vortriebsrohres integriert, so daß bei Montage der Rohre lediglich noch der T-Ring und eventuell ein weiterer Dichtring am Ende des anderen Vortriebsrohres montiert werden muß.

Die Erfindung zeichnet sich durch eine sehr kompakte Bauweise der Vortriebsrohre aus, wobei gegenüber herkömmlichen Zement- und Betonrohren die Dicken um den Faktor 10 niedriger liegen, mithin bei gleicher Nennweite wesentlich weniger Material beim Vortrieb der Rohre verdrängt werden muß. Auch der Aufbau der Kräfte beim Vortrieb ist somit wesentlich geringer. Das heißt, beim Vortrieb der Rohre treten geringere Kräfte als bei herkömmlichen Zementrohren auf, so daß eine wesentlich schonendere Verlegung möglich ist. Da die inneren Gußeisenrohre an beiden Enden gleich, insbesondere ohne Aufweitung zur Herstellung einer Muffe ausgebildet sind, können die Rohre unmittelbar von langen Rohren durch Schneiden abgenommen werden, ohne daß eine zusätzliche Behandlung der Rohre erforderlich ist. Dadurch verringert sich der Preis derartiger Vortriebsrohre beträchtlich. Das Material der Zwischenschicht wirkt im übrigen auch sekundär als Korrosionsschutz für das Gußeisenrohr. Aufgrund des Wickelfalzrohres ist eine Armierung der Betonzwischenschicht nicht erforderlich. Zugleich gewährleistet das Wickelfalzrohr mit nach innen vorstehenden Überlappungsfalzen eine sehr glatte Außenoberfläche, wodurch die Reibungskräfte beim Vortrieb der Rohre verringert werden.

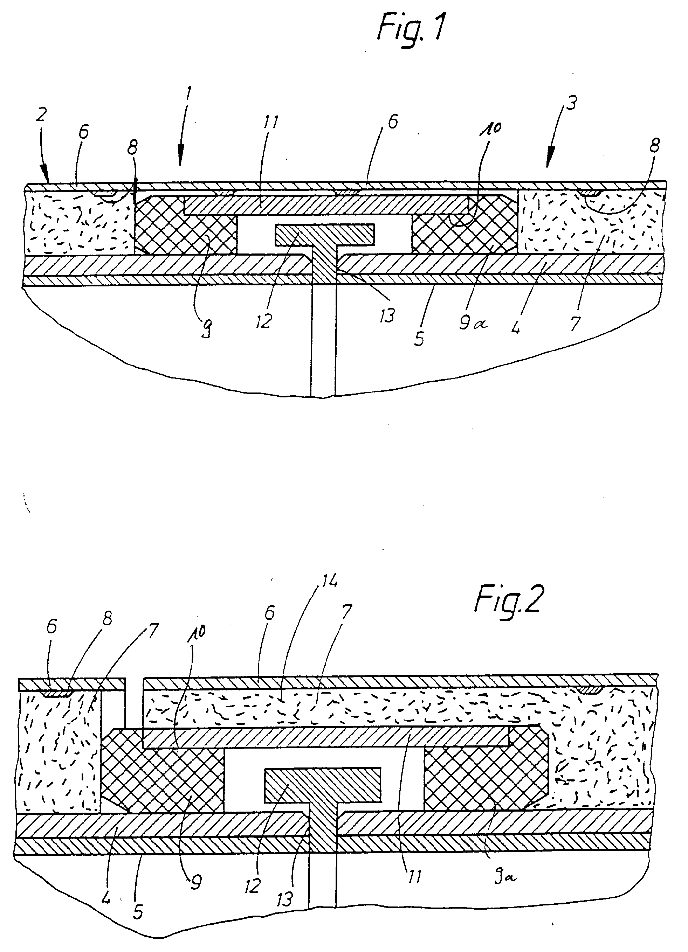

Nachfolgend werden Ausführungsbeispiele der Erfindung anhand der Zeichnung beschrieben, in denen die Fig. 1 bis 4 verschiedene Ausführungsbeispiele der Rohrverbindung im Schnitt und in schematischer Darstellung zeigen.

Die durch die Rohrverbindung 1 miteinander verbundenen beiden Vortriebsrohre 2 und 3 weisen je ein inneres Rohr 4 aus duktilem Gußeisen auf, welches innen bei 5 mit Zement beschichtet sein kann. Das innere Gußeisenrohr 4 ist mit radialem Abstand von einem koaxial angeordneten äußeren Mantelrohr 6 umgeben. Der Zwischenraum zwischen dem inneren Gußeisenrohr 4 und dem äußeren Mantelrohr 6 ist mit einer Zwischenschicht 7 gefüllt. Als Material für die Zwischenschicht 7 eignet sich insbesondere Zementmörtel, wobei aber auch andere ähnliche Materialien verwendet werden kann, etwa Blähbeton u. dgl., wobei aber möglichst schwindungsarme Materialien Verwendung finden. Zementmörtel eignet sich aber insbesondere wegen seiner geringen Kosten.

Das Mantelrohr kann aus Asbestzement oder Kunststoff hergestellt sein, ist jedoch im dargestellten Ausführungsbeispiel insbesondere als Wickelfalzrohr gebildet, d.h. aus einem zu einem Rohr gewickelten Blechstreifen hergestellt. Die bei der Herstellung des Wickelfalzrohres entstehenden Vorsprünge 8 an den Überlappungsstellen sind hierbei jedoch nach innen gerichtet, so daß eine Mantelrohrfläche mit einer glatten Außenfläche entsteht. Die nach innen vorspringenden Rippen 8 dienen hierbei als Armierungsrippen für die Zwischenschicht 7 aus Betonmörtel.

Die beiden inneren Gußeisenrohre 4 stehen an den Enden über die Zwischenschicht 7 axial vor, so daß die Dichtringe 9 und 9a angeordnet werden können, die stirnseitig an der Zwischenschicht 7 anliegen. Hierbei können handelsübliche Dichtringe Verwendung finden, die insbesondere oben bei 10 mit einer Ausnehmung zur Aufnahme eines Distanzringes 11 versehen sind. Als Material für die Dichtringe eignet sich Naturkautschuck und Gummi. Die Dichtringe können insbesondere aus Tyton® hergestellt sein. Der Distanzring 11 kann aus Guß, Kunststoff, Asbestzement hergestellt sein, ist insbesondere aber aus Stahl oder Blech hergestellt.

Im Bereich der Stoßfuge zwischen den in Flucht angeordneten Gußeisenrohren 4 ist ein Ring 12 schwimmend gelagert, der im dargestellten Ausführungsbeispiek T-förmig ausgebildet ist. Der Steg 13 des Ringes 12 erstreckt sich hierbei in den Bereich der Stoßfuge, wobei die beiden Rohre 4 an den Flanken des Stegs 13 anliegen. Die beiden Schenkel des Rings 12 übergreifen die beiden Endabschnitte der Gußeisenrohre 4. Der Ring 12 ist aus einem Material hergestellt, welches weicher ist als das Material der Gußeisenrohre, wobei insbesondere Weicheisen, auch Aluminium oder Kupfer, Anwendung finden. Der T-Ring 12 muß in der Lage sein, Verformungen aufzunehmen, so daß beim Vortrieb über lange Strecken eventuell auftretende Abwinklungen durch Stauchung des T-Rings aufgenommen bzw. kompensiert werden können. Notfalls nimmt das duktile Gußeisen durch Stauchung oder Verformung diese Abwinklungen auf.

Wie aus Fig. 1 hervorgeht, ist bei dem in Fig. 1 links dargestellten Vortriebsrohr 2 das äußere Mantelrohr 6 bündig mit der Stirnseite der Zwischenschicht 7, wohingegen das Mantelrohr 6 am linken Ende des rechts dargestellten Vortriebsrohres 3 sich über die Zwischenschicht 7 und auch über den vorkragenden Endabschnitt des inneren Gußeisenrohres 4 hinaus axial erstreckt, so daß zwischen dem vorstehenden Ende des äußeren Mantelrohres 6 und den vorstehenden Endabschnitten der beiden Rohre 4 eine Aufnahmekammer für die beiden Dichtringe 9 und 9a sowie den Distanzring 11 und den T-förmigen Ring 12 gebildet ist. Ersichtlich reduziert sich die Dicke der Vortriebsrohre 2 und 3 auf die Stärke des Gußeisenrohres plus die Höhe der konventionellen Dichtringe 9 und 9a einschließlich der Dicke des äußeren Mantelrohres 6, wobei das äußere Mantelrohr entsprechend dünnwandig dimensioniert sein kann, weil es lediglich die Funktion einer verlorenen Schalung für die Zwischenschicht 7 erfüllen muß. Das heißt, die nach Fig. 1 aufgebauten Vortriebsrohre 2 und 3 zeichnen sich durch einen sehr dünnwandigen Aufbau aus.

Die Vortriebsrohre 2 und 3 sind als verlegefertige Einheit im Werk montiert und zwar bestehend aus dem inneren Rohr 4, dem äußeren Mantelrohr 6 als verlorene Schalung und der Zwischenschicht 7 aus insbesondere Zementmörtel. Vor Ort brauchen lediglich die T-förmigen Ringe, die Dichtringe sowie der Distanzring eingesetzt werden.

Die Ausführungsform nach Fig. 2 stimmt weitgehend mit der Ausführungsform nach Fig. 1 überein, so daß für dieselben Bauteile die gleichen Bezugszeichen verwendet worden sind. Der Unterschied ist darin zu sehen, daß das in der Fig. 2 rechts dargestellte Vortriebsrohr 3 als verlegefertige Einheit einschließlich des Dichtrings 9a und des Distanzrings 11 hergestellt ist. Dadurch vereinfacht sind die Montage, da nur noch vor Ort der weitere Dichtring 9 und der schwimmend gelagerte T-förmige Ring 12 montiert werden müssen. Schließlich ist bei dieser Ausführungsform infolge der Einbettung des Distanzrings 11 in die verlegefertige Einheit auch das Material der Zwischenschicht bei 14 über den Distanzring 11 gezogen.

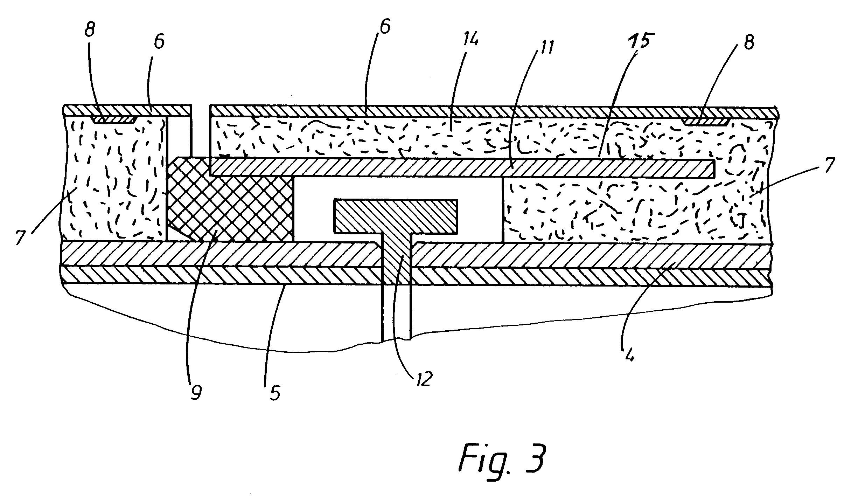

Die Ausführungsform nach Fig. 3 unterscheidet sich von den vorhergehenden Ausführungsformen dadurch, daß lediglich ein Dichtring, nämlich der Dichtring 9, auf dem links dargestellten Vortriebsrohr 2 verwendet wird. Der Distanzring 11 aus Blech ist hierbei bei 15 in das Material der Zwischenschicht 7 eingebettet, so daß die Vortriebsrohre nach Fig. 3 als verlegefertige Einheit aus innerem Gußeisen 4, äußerem Mantelrohr 6, Zwischenschicht 7 und an einem Ende mit integriertem Distanzring 11 ausgebildet sind. Vor Ort braucht lediglich noch der Dichtring 9 und der T-förmige Ring 12 eingebracht bzw. montiert werden. Aufgrund des Wegfalls eines der beiden Dichtringe wird allerdings bei dieser Ausführungsform der Vorteil aufgegeben, daß die Verbindung absolut wasserdicht ist, da bei dieser Ausführungsform der Wasserdruck mangels des einen Dichtrings unmittelbar vor dem Beton der Zwischenschicht 7 steht.

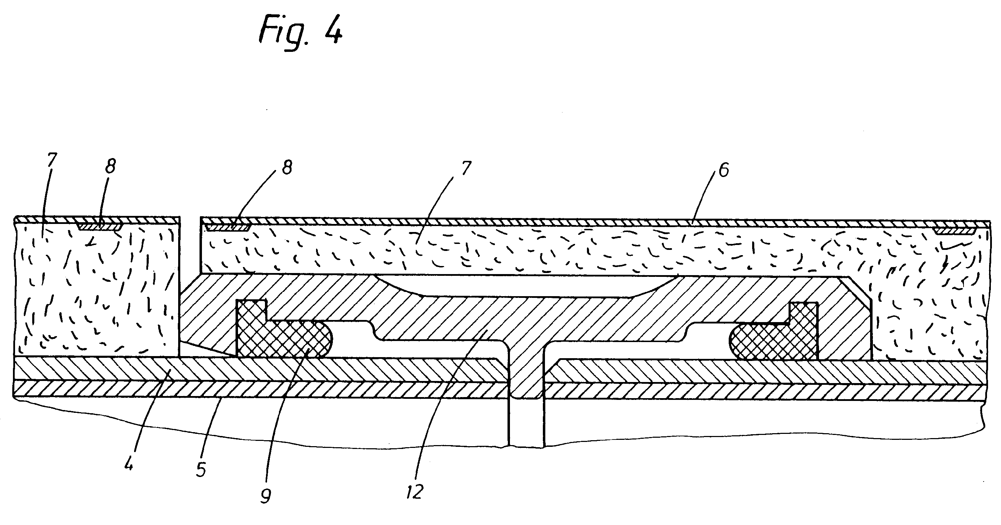

Die Ausführungsform nach Fig. 4 zeichnet sich dadurch aus, daß der T-förmige Ring 12 so ausgebildet ist, daß er zugleich die beiden Dichtringe 9 und 9a mit den entsprechenden Ausnehmungen aufnimmt, so daß die Dichtringe und der T-förmige Ring 12 als eine Einheit bei Zusammenschließen der beiden Rohre montiert werden kann. Als Material des T-förmigen Rings und der beiden Dichtringe 9 und 9a wird Tyton® verwendet.

## Patentansprüche

1. Rohrverbindung an Vortriebsrohren (2,3), die in Vortriebstechnik unterirdisch verlegt werden, ein inneres Rohr (4) aus Gußeisen, auf welches die Preßkraft beim Vortrieb aufgebracht wird und ein koaxial angeordnetes äußeres Mantelrohr (6) aufweisen, welches Mantelrohr gegenüber dem Gußeisenrohr (4) einen größeren Durchmesser aufweist und eine verlorene Schalung für eine Zwischenschicht (7) aus zementmörtelartigem Material zwischen innerem und äußerem Rohr (4,6) bildet, dadurch gekennzeichnet, daß jedes innere Rohr aus muffenfrei ausgebildeten Gußeisenrohren (4) aufgebaut ist, daß die Verbindung (1) mindestens einen Dichtring (9,9a) auf einem gegenüber der Zwischenschicht (7) vorstehenden Endabschnitt der inneren Gußeisenrohre (4) aufweist, der von einem vorstehenden Endabschnitt des anderen Vortriebsrohres übergriffen ist, und daß zwischen den anzuschließenden Vortriebsrohren (2,3) ein Distanzring (11) und/oder ein Ring (12) angeordnet ist.

2. Rohrverbindung nach Anspruch 1, dadurch gekennzeichnet, daß der Distanzring (11) bei nur einem Dichtring (9) der Rohrverbindung an diesem anliegt und im übrigen gegenüber der Zwischenschicht (7) des anderen Vortriebsrohres verankert ist, und daß der Distanzring bei einem Dichtring (9,9a) an jedem Endabschnitt der zu verbindenen Vortriebsrohre (2,3) an beiden Dichtringen (9,9a) aufgenommen bzw. zwischen beiden Dichtringen (9,9a) angeordnet ist.

3. Rohrverbindung nach Anspruch 1 oder 2, dadurch gekennzeichnet, daß der Distanzring (11) vom Mantelrohr und/oder der Zwischenschicht (7) eines oder beider Vortriebsrohre (2,3) überdeckt ist.

4. Rohrverbindung nach einem der vorhergehenden Ansprüche, dadurch gekennzeichnet, daß das Mantelrohr (6) aus Blech, Asbestzement oder Kunststoff, vorzugsweise aus einem Wickelfalzrohr aus Blech hergestellt ist, dessen Überlappungsfalze (8) an der Innenseite des Mantelrohres (6) angeordnet sind und Armierungsrippen für die Zwischenschicht (7) bilden.

5. Rohrverbindung nach einem der vorhergehenden Ansprüche, dadurch gekennzeichnet, daß die inneren Gußeisenrohre (4) in Flucht zueinander angeordnet sind und daß im Bereich der Stoßfuge beider Gußeisenrohre (4) ein Ring (12) schwimmend gelagert ist, der mit einer vorstehenden Zunge (13) in die Stopfuge zwischen die Stirnenden der beiden Gußeisenrohre (4) greift und aus einem gegenüber dem Gußeisenrohr (4) weicheren Material gebildet ist.

6. Rohrverbindung nach Anspruch 5, dadurch gekennzeichnet, daß der Ring (12) T-förmigen Querschnitt aufweist, wobei die Zunge (13) durch den Steg gebildet ist und die beiden T-Schenkel die Endabschnitte der entsprechenden inneren Gußeisenrohre (4) übergreifen.

7. Rohrverbindung nach Anspruch 5 oder 6, dadurch gekennzeichnet, daß der Ring (12) aus Weicheisen, Kupfer oder Aluminium hergestellt ist.

8. Rohrverbindung nach einem der Ansprüche 5 bis 7, dadurch gekennzeichnet, daß der Ring (12) zugleich zur Aufnahme der Dichtringe ausgebildet ist.

9. Rohrverbindung nach einem der vorhergehenden Ansprüche, dadurch gekennzeichnet, daß die Vortriebsrohre (2,3) als verlegefertige Einheit aus innerem Gußeisenrohr (4), äußerem Mantelrohr (6) und Zwischenschicht (7) ausgebildet sind.

10. Rohrverbindung nach Anspruch 9, dadurch gekennzeichnet, daß in der verlegefertigen Einheit der Distanzring (11) und gegebenenfalls ein Dichtring (9) an einem Ende des Vortriebsrohres integriert ist bzw. sind.

11. Rohrverbindung nach einem der vorhergehenden Ansprüche, dadurch gekennzeichnet, daß durch vorstehende Endabschnitte der inneren Gußeisenrohre (4), Mantelrohre (6) und/oder der Zwischenschicht (7) zwischen den anzuschließenden Vortriebsrohren (2,3) eine Kammer zur Aufnahme des oder der Dichtringe (9,9a), des Distanzrings (11) und des schwimmend gelagerten Rings (12) begrenzt ist.

## Claims

1. A pipe connection for advance working pipes (2, 3) to be laid underground by an advance working technique and comprising an inner pipe (4) made of cast iron, on which the compression force is brought to bear during the advance working pressure, and a co-axially located outer jacket-pipe (6), said jacket-pipe having a larger diameter than the cast iron pipe (4) and forming a dead-ended sheathing for an intermediate layer (7) made of cement-mortar type material between the inner and outer pipes (4, 6), **characterised in** **that** the inner pipes consist of cast iron pipes (4) constructed without sleeves, that the pipe connection (1) comprises at least one sealing ring (9, 9a) on an end-section of the inner cast iron pipe (4), said end-section projecting opposite the intermediate layer (7) and being overlapped by a projecting end-section of the other advance working pipe, and that, between the advance working pipes (2, 3), a spacer ring (11) and/or a ring (12) is located.

2. A pipe connection according to claim 1, **characterised in that** the spacer ring (11) is adjacent to only one sealing ring (9) of the pipe connection and additionally is securely fixed opposite the intermediate layer (7) of the other advance working pipe, and that the spacer ring, at one sealing ring (9, 9a) at each end-section of the advance working pipes (2, 3) which are to be joined together, is held adjacent to both sealing rings (9, 9a) or is positioned between the two sealing rings (9, 9a).

3. A pipe connection according to claim 1 or 2, **characterised in that** the spacer ring (11) is overlapped by the jacket pipe and/or the intermediate layer (7) of one or both of the advance working pipes (2, 3).

4. A pipe connection according to any one of the preceding claims, **characterised in that** the jacket pipe (6), which is made of sheet metal, asbestos cement or a synthetic material, is preferably manufactured from sheet metal lap-jointed piping the overlapping folds (8) of which are located on the inner side of the jacket pipe (6) and form reinforcement ribs for the intermediate layer (7).

5. A pipe connection according to any one of the preceding claims, **characterised in that** the inner cast iron pipes (4) are arranged in alignment with one another and that, in the area of the butt-joint of the two cast iron pipes (4), a ring (12) is floatingly positioned to locate, with a projecting tongue (13), into the butt-joint between the front end-surfaces of the two cast iron pipes (4), said ring (12) being constructed from a softer material than the cast iron pipe (4).

6. A pipe connection according to claim 5, **characterised in that** the ring (12) has a T-shaped cross-section, wherein the tongue (13) is formed by the shank and the two T-joints overlap the end sections of the corresponding inner cast iron pipes (4).

7. A pipe connection according to claim 5 or 6, **characterised in that** the ring (12) is manufactured from refined iron, copper or aluminium.

8. A pipe connection according to any one of the claims 5 to 7, **characterised in that** the ring (12) is adapted at the same time for locating the sealing rings.

9. A pipe connection according to any one of the preceding claims, **characterised in that** the advance working pipes (2, 3) are constructed as a pre-fabricated unit made up of an inner cast iron pipe (4), an outer jacket pipe (6) and an intermediate layer (7).

10. A pipe connection according to claim 9, **characterised in that,** within the pre-fabricated unit, the spacer ring (11), and, in certain cases, a sealing ring (9), is or are, as the case may be, integrated at one end of the advance working pipe.

11. A pipe connection according to any one of the preceding claims, **characterised in that,** by means of projecting end sections of the inner cast iron pipes (4), the jacket pipes (6) and/or the intermediate layer (7), there is defined, between the advance working pipes (2, 3) to be connected to one another, a compartment for locating the sealing ring or rings (9, 9a), the spacer ring (11) and the floatingly positioned ring (12).

## Revendications

1. Joint pour tuyaux propulsés (2, 3), qui sont posés sous terre par une technique de propulsion, et qui présentent un tuyau intérieur (4) en fonte de fer, sur lequel on applique la force de pression lors de l'avancement, et un tuyau-enveloppe (6) extérieur, co-axial, lequel tuyau-enveloppe (6) présente un diamètre plus grand que le tuyau (4) en fonte de fer et forme un coffrage perdu pour une couche intercalaire (7), en matériau du genre mortier au ciment, entre le tuyau intérieur (4) et le tuyau extérieur (6), caractérisé en ce que chaque tuyau intérieur est formé de tuyaux en fonte de fer (4) réalisés sans manchons, en ce que le joint (1) présente au moins une bague d'étanchéité (9, 9a) à l'une des parties d'extrémité des tuyaux intérieurs en fonte de fer (4), qui dépasse de la couche intercalaire (7) et qui est coiffée par une partie d'extrémité, en saillie, de l'autre tuyau propulsé, et en ce qu'une bague d'écartement (11), et/ou une bague (12), est placée, ou sont placées, entre les tuyaux propulsés (2, 3).

2. Joint de tuyau suivant la revendication 1, caractérisé en ce que la bague d'écartement (11), dans le cas d'une seule bague d'étanchéité (9) du joint de tuyau, est appliquée contre celle-ci et, en plus, est ancrée par rapport à la couche intercalaire (7) de l'autre tuyau propulsé, et en ce que la bague d'écartement, dans le cas d'une bague d'étanchéité (9, 9a) sur chacune des parties d'extrémité des tuyaux propulsés (2, 3) à raccorder, est reprise sur les deux bagues d'étanchéité (9, 9a) ou est disposée entre les deux bagues d'étanchéité (9, 9a).

3. Joint de tuyau suivant la revendication 1 ou la revendication 2, caractérisé en ce que la bague d'écartement (11) est recouverte par le tuyau-enveloppe et/ou par la couche intercalaire (7) de l'un ou des deux tuyaux propulsés (2, 3).

4. Joint de tuyau suivant l'une quelconque des revendications précédentes, caractérisé en ce que le tuyau-enveloppe (6) est fabriqué en tôle, en ciment d'amiante ou en matière plastique, de préférence en tuyau métallique agrafé, dont des agrafes à recouvrement (8) sont disposées sur la face interne du tuyau-enveloppe (6) et forment des nervures d'armature pour la couche intercalaire (7).

5. Joint de tuyau suivant l'une quelconque des revendications précédentes, caractérisé en ce que les tuyaux en fonte de fer (4) sont disposés dans l'alignement les uns des autres et en ce que, dans la zone de l'interstice de contact des deux tuyaux en fonte de fer (4), une bague (12) est montée flottante, qui fait prise avec une languette (13) en saillie, dans l'interstice de contact entre les extrémités frontales des deux tuyaux en fonte de fer (4), et est réalisée dans un matériau plus mou que le tuyau en fonte de fer (4).

6. Joint de tuyau suivant la revendication 5, caractérisé en ce que la bague (12) présente une section en T, la languette (13) étant formée par la tige centrale du T et les deux branches latérales du T recouvrant les deux parties d'extrémité des tuyaux intérieurs en fonte de fer (4) correspondants.

7. Joint de tuyau suivant la revendication 5 ou la revendication 6, caractérisé en ce que la bague (12) est réalisée en fer doux, en cuivre, ou en aluminium.

8. Joint de tuyau suivant l'une quelconque des revendications 5 à 7, caractérisé en ce que la bague (12) est réalisée en même temps de façon à recevoir les bagues d'étanchéité.

9. Joint de tuyau suivant l'une quelconque des revendications précédentes, caractérisé en ce que les tuyaux propulsés (2, 3) sont réalisés sous la forme d'unités prêtes à être posées, comportant un tuyau intérieur en fonte de fer (4), un tuyau-enveloppe extérieur (6) et une couche intercalaire (7).

10. Joint de tuyau suivant la revendication 9, caractérisé en ce que, dans l'unité prête à être posée, la bague d'écartement (11), et, le cas échéant, une bague d'étanchéité (9,), est intégrée, ou sont intégrées, sur l'une des extrémités du tuyau propulsé.

11. Joint de tuyau suivant l'une quelconque des revendications précédentes, caractérisé en ce qu'une chambre destinée à recevoir la ou les bagues d'étanchéité (9, 9a), la bague d'écartement (11) et la bague (12) montée flottante, est délimitée par des parties d'extrémité en saillie des tuyaux intérieurs en fonte de fer (4), des tuyaux-enveloppes (6) et/ou de la couche intercalaire (7), entre les tuyaux propulsés (2, 3) à raccorder ensemble.
